# EUROPEAN PATENT SPECIFICATION

(11) **EP 1 993 347 B1**
(45) Date of publication and mention of the grant of the patent: **08.05.2019**
(21) Application number: 07712613.4
(22) Date of filing: 06.03.2007
(51) Int. Cl.: A01G 9/24, F24F 3/14

(54) **AN ARRANGEMENT AND METHOD FOR DEHUMIDIFYING GREENHOUSE AIR AND A GREENHOUSE**
ANORDNUNG UND VERFAHREN ZUR ENTFEUCHTUNG VON GEWÄCHSHAUSLUFT UND GEWÄCHSHAUS
SYSTÈME ET MÉTHODE POUR DÉSHUMIDIFIER L'AIR D'UNE SERRE ET SERRE

(30) Priority: 08.03.2006 FI 20065153
(43) Date of publication of application: 26.11.2008
(73) Proprietor: Novarbo Oy, 27511 Eura (FI)
(72) Inventor: HAUKIOJA, Markku, 27130 Eurajoki As (FI); HUTTUNEN, Jukka, 26910 Unaja (FI); HUHTA-KOIVISTO, Esko, 02170 Espoo (FI)
(74) Representative: LEITZINGER OY
(86) International application number: PCT/FI2007/050121
(87) International publication number: WO 2007/101914

(56) References cited:
- JP-A- 04 148 123
- JP-A- 04 148 123
- JP-A- 09 294 462
- JP-A- 09 294 462
- JP-A- 10 165 002
- JP-A- 10 165 002
- JP-A- 2002 330 640
- JP-A- 2002 330 640
- JP-A- 2003 009 678
- JP-A- 2003 009 678

## Description

### FIELD OF THE INVENTION

The present invention relates to a system and method for drying and cooling greenhouse air and to a greenhouse equipped with the system according to the invention.

### DESCRIPTION OF THE PRIOR ART

In modern greenhouse production, the aim is to control the climate in the greenhouse to correspond as closely as possible to optimal conditions of plant growth. In optimal growing conditions, the temperature in the greenhouse is about 18-30 °C, the humidity of air about 60-90% and the carbon dioxide content over 1000 ppm, depending on the plant cultivated and the situation. Optimal conditions of growth require good control of the temperature of air, humidity and carbon dioxide content.

In widespread use is a greenhouse in which the climate is controlled by means of vents and/or fans. In this case, excess heat produced by solar radiation is removed by ventilation. There is at least a partial need for ventilation also in Finland during about 8 months of the year.

The cooling of greenhouse air is enhanced by spraying water in the form of as fine a mist as possible into the greenhouse. When using spraying, the evaporating water binds heat from the greenhouse air and increases the humidity of the air. When spraying is used, typically 0,1-0,5 litres/m² of greenhouse/h is sprayed. Efficient use of spraying for cooling greenhouse air usually also requires ventilation for remove humid air from the greenhouse and to continue spraying.

In current greenhouses cannot be maintained a carbon dioxide level optimal for plant growth when a high radiation level prevails, which would give the greatest benefit. The carbon dioxide escaping with the ventilation air would increase the amount of carbon dioxide needed to such a high level that its dosing would not be economically cost-effective. Thus, when a high radiation level prevails, in the best conditions for plant growth usually has to be settled for the outdoor air level (about 350 ppm) in carbon dioxide level content instead of the carbon dioxide level (500 ppm - 1500 ppm) preferable for plant growth. Due to the foregoing, in current greenhouses plant growth usually remains markedly lower than what it could be if the carbon dioxide level of greenhouse air could be kept high also when the radiation level is high. For example in Finland, the best growth results are usually achieved in late winter when the radiation level is high and outside air is so cold that greenhouses do not need to be cooled by ventilation and thus an increased level of carbon dioxide can be maintained in greenhouses. In warmer climate conditions are not normally achieved growth results as high as this.

Because of the above, attempts have in recent years been made worldwide to develop different types of closed greenhouse solutions. In a closed greenhouse, the inside air is almost completely cut off from outdoor air. Outdoor air is not let in through vents, nor is it blown by fans into the greenhouse, but the excess heat is removed by other means. The carbon dioxide needed by the plants is provided through technical production and its content is preferably increased to a minimum level of 500-1500 ppm. Due to the optimally controllable climate, a closed greenhouse is considered an ideal solution for growing plants.

Several international patents have been filed concerning a greenhouse system where climate control is realised at least partly in accordance with the closed system:
Patent no. EP 0 517 432 A1 puts forth a thermal accumulator which collects the daily solar energy and which discharges it during the night, partly for heating the greenhouse and partly into the cooler night air. In this case, the size of the thermal accumulator must be about 400 cubic metres for a 1000 square metre greenhouse, which increases the investment costs of the system to an economically unprofitable level. In the method disclosed in the said patent, as in many other methods, the cooling of greenhouse air takes place in a separate heat exchanger located outside the greenhouse, into which the greenhouse air is conveyed, usually by means of ordinary fans, and from which it is returned cooled into the greenhouse.

As prior art, reference is also made to US patent no. 4,044,078 disclosing a device developed for cooling storage spaces, where cold water is sprayed from above through a grating frame against an air blast and the heated water is cooled by means of a cooler on the outside. In this device is also essential a separate apparatus and fan for cooling the air.

US publication no. 4,707,995 discloses a system for controlling the humidity of air and temperature in a greenhouse, the operation of which is based on using natural, concentrated salt water for dehumidification. As in the solution described above, air is conveyed through a water jet and the processed water is recovered outside the device. The device is not generally suitable for cooling or dehumidifying greenhouses.

JP publication no. 4148123 A 19920521 discloses a solution, where air is blown into water sprayed from above, the air being intended to come into heat exchange contact with the water sprayed inside.

JP publication 2104222 A 19900417 also utilizes directly heat exchange between water and air for cooling greenhouse air. The device comprises a heat exchanger functioning with cold groundwater, by means of which the greenhouse is cooled in night-time with air entered from above and humidity removed at the bottom of the device. The system is intended for night-time cooling and is not powerful enough for daytime removal of heat from a closed greenhouse.

JP publication 10165002 A discloses a solution, where cooled water is pumped into nozzles near a ceiling of greenhouse. The nozzles spray the cooled water creating mist into the air space of the greenhouse. A fan is provided for stirring the air in the greenhouse.

In methods where greenhouse air is conveyed for cooling in separate condensers or heat exchangers, the central problem that arises is the high fan power required for moving the greenhouse air. Due to the fan power required, the fans generally account for a considerable share of the investment and operating costs of the apparatus as a whole. The use of powerful fans is also a quite considerable source of noise in the greenhouse and its vicinity.

In addition to solutions described above, in some implementations of closed greenhouses cooling is carried out using normal heat pump technology. In this solution, the cost level of equipment is very high because the cooling capacity required during a high radiation level is high (500-1000 W/m² of greenhouse at the highest).

All current solutions for cooling and drying the air in a closed greenhouse are very expensive in terms of investment costs and partly also operating costs. This is why the solutions presented so far have not been taken into use in practice in greenhouse cultivation, with the exception of some applications constructed on a test basis.

### Description of the invention

In the present patent application is described an invention by means of which the drying and cooling of air in a closed or partly closed greenhouse can be carried out in a substantially more economical manner than in earlier solutions.

In the system and method according to the present invention, the dehumidification and cooling of greenhouse air takes place by spraying water cooler than the dewpoint temperature of air directly into the greenhouse air space and by allowing it to fall as drops or by flowing in the air space of the room. In this way, condensing humidity and heat transfer from the greenhouse air into the water.

Characteristic features of the present invention are:
- In the system and method according to the invention, cooling water is conveyed directly into the air space of the greenhouse, which means that separate condensers and heat exchangers are not required. The entire air space of the greenhouse acts as a condenser space. In the solution according to the invention are also not required fans for moving the air to be cooled because cooling takes place immediately in the air space of the greenhouse. The air flow brought about by the movement of the water being sprayed, the cooling of air, the intrinsic movement of air in a greenhouse or low-power fans conventionally intended for circulating the air space of a greenhouse even out the humidity and temperature differences in the greenhouse, whereupon the climate in the greenhouse remains sufficiently constant from the viewpoint of plant growth.
- The amount of water used is very high, typically 100-500 litres (at least 50 litres)/m² of greenhouse/h while current cooling systems based on spraying typically use less than 1 litre/m² of greenhouse/h.
- The temperature of the water used is low, preferably 0-15 °C, however so that even after the fall through the air the temperature of the water will have risen at most to the desired dewpoint temperature.
- The system according to the invention differs from conventional spraying devices and systems in that the amount of water used is high (hundredfold to thousandfold) and the temperature of the water is low. This means that both heat and humidity is bound to the water sprayed into the greenhouse air.

In conventional spraying, the aim is to evaporate water into the greenhouse air, whereupon the humidity of the greenhouse air increases and the temperature decreases in proportion to the evaporation temperature of the water. Continued spraying thus requires that excess humidity is removed from the greenhouse through ventilation.

In an embodiment, conventional spraying may be combined with the greenhouse air drying and cooling system according to the invention by maintaining by spraying the relatively high humidity level (preferably over 70% RH) of the greenhouse air and at the same time efficiently cooling the greenhouse air by means of the apparatus and method of the invention and condensing humidity from the air. This will dry the air and allow the spraying to be continued without having to reduce humidity by ventilation. If there is such growth in the greenhouse that is able to evaporate enough water, spraying can be given up and the method and apparatus according to the invention can be used alone to remove excess humidity and to cool the greenhouse air.

In another embodiment, the humidity of greenhouse air can be made constant as desired by adjusting the temperature of the cooling water to correspond to the dewpoint temperature of the desired humidity of air and temperature, in which case no separate spraying equipment is required.

The apparatus and method according to the invention can be dimensioned so that no ventilation devices are required in the greenhouse. However, in many cases it is more economical to use ventilation during the highest thermal load, which means that the apparatus according to the invention can be dimensioned to a lower capacity.

In the system, method and greenhouse according to the invention is needed a substantial amount of cool water, preferably having a temperature below 15 °C, for drying and cooling the greenhouse air. The dimensioning of the apparatus is determined according to the temperature of the water available. The colder the water available, the smaller can the apparatus of the invention be dimensioned.

The water required to be conveyed into the greenhouse air for drying and cooling the air can, be taken directly from natural waters, for example, in Finnish conditions also in summer from the cool hypolimnion below the metalimnion of the water. The cool water needed for drying and cooling may also be produced in an evaporator apparatus located outside the greenhouse when the outdoor air is sufficiently cool or correspondingly sufficiently dry for cooling the water by means of the evaporator.

Cool water obtained from outside the greenhouse may be circulated either directly in the system intended for drying and cooling greenhouse air or it may be used indirectly by means of a heat exchanger for cooling the water circulated in the system.

When using a heat exchanger, pure water condensing from the greenhouse air can be recovered from the system and then used as spraying and watering water in the greenhouse. This is highly significant in areas with a shortage of clean watering water for greenhouse production.

### Advantages of the invention compared with the prior art

By means of the method and apparatus according to the invention, the humidity and temperature of greenhouse air can be controlled by means of substantially more economical equipment and operating costs than with known solutions intended for controlling the climate of a closed greenhouse.

Differing from earlier solutions, in the system according to the invention, the entire greenhouse acts as a condenser, and no separate condenser chambers or fans are required. They are replaced by the normal movement of air in a greenhouse and by the fact that these "open sprinkler condensers" may easily be located in different places in the greenhouse, whereby the cooled air will be distributed evenly in the greenhouse by means of the natural movement of air. As regards condensers possibly used for cooling the water circulating in the system, fans and condensers are correspondingly replaced by the free movement of outdoor air.

Major advantages compared with other known greenhouse dehumidification and cooling systems and methods are:
- Equipment costs are lower, because no separate condensation chambers or fans are required for conveying the greenhouse air into the condenser.
- Operating costs are substantially lower, because it has been possible to exclude the parts that consumed essentially the most energy in earlier systems, that is, the fans.
- The method works globally everywhere, where there is sufficient cool water available or where water can be cooled by means of sufficiently dry outdoor air.
- The use of this method does not cause the type of noise problem in the greenhouse and its surroundings as methods using fans do.

On the basis of the system and method according to the invention can be designed a closed greenhouse, where the structures required by the method are combined with normal greenhouse constructions and the automatic control required by the system is built as a part of the conventional automation of the greenhouse.

Embodiments of the invention are described in the accompanying drawings, to which the invention is, however, not limited.
- Figure 1: shows the system according to the invention,
- Figure 2: shows a typical greenhouse arrangement, and
- Figure 3: shows an embodiment of the invention for growing low-growth plants.

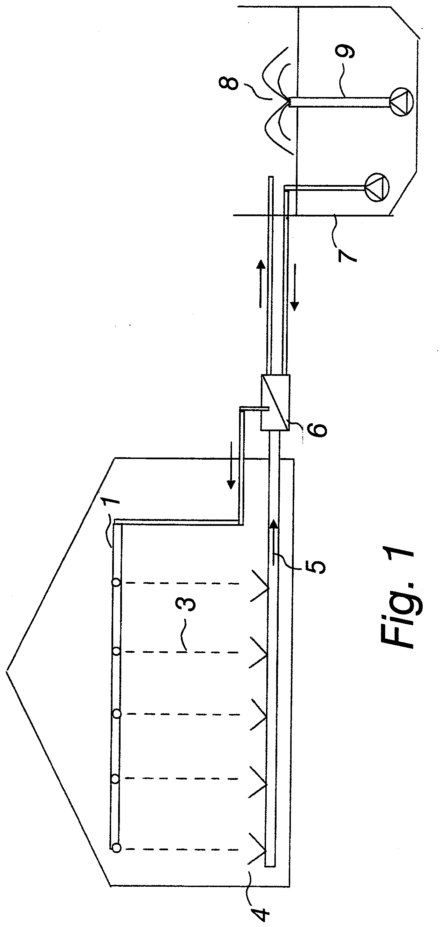

Figure 1 shows a general embodiment of the invention, where water distribution devices 1 are arranged in the upper part of the greenhouse and water is sprayed into the air space of the greenhouse without separate condensation chambers, structures or fans. The temperature of the water is below its dewpoint. The devices are preferably dimensioned so that by using them, at least about 50 litres of water per square meter of greenhouse can be sprayed into the greenhouse air space in an hour. The water distribution devices 1 are located in the central part of the upper part of the greenhouse and/or on the sides and/or under the cultivation tables in the greenhouse.

In the lower part of the greenhouse are water collection devices 2 for collecting the water sprayed from the upper part and for returning it into the devices of the system.

The water collected is conveyed from the greenhouse along a discharge pipe 5. Outside the greenhouse, a heat exchanger 6 is connected to the discharge pipe 5 for cooling the water discharging from the greenhouse.

The apparatus may, in addition, be equipped with an evaporator apparatus 8 for cooling the water discharged from the greenhouse. This condenser apparatus 8 is in addition connected to a water supply 7 and a pump device 9 for spraying the water. The water in the water supply can be sprayed into the air in such a way that the water being sprayed comes into contact with the outdoor air and after this, returns again to the water supply or directly to the greenhouse air drying and cooling apparatus.

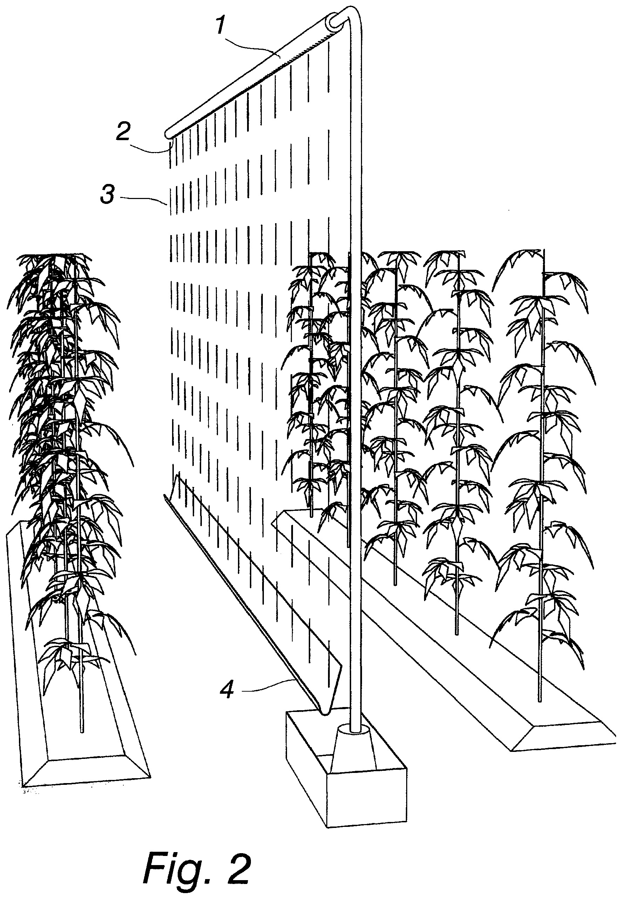

Figure 2 depicts a typical embodiment of the system and method. In this embodiment, there is a pipe system 1 in the upper part of the greenhouse with 0,3-1 mm nozzle holes 2, through which water 3 cooler than the dewpoint temperature of the greenhouse is sprayed into the air space of the upper part of the greenhouse, between the rows of plants, so that water is able to fall freely as drops into the collection troughs 4 below, from where it is conveyed into a collection tank and recirculated or alternatively conveyed completely or partly into the water system and replaced by cooler water from the water system.

The amount of water sprayed in this embodiment is typically 100-500 litres of water/m² of greenhouse/h. Correspondingly, the area required by sprinkler irrigation in the greenhouse is 1-4% of the greenhouse area in a typical embodiment. This free area required is usually easy to find between the rows of plants in the greenhouse. The spray pipes 1 may alternatively also be located on the sides of the greenhouse.

If the layering of cold and hot air in the greenhouse (e.g. in the case of high tomato and cucumber growths) proves to be problematic, the layering of the greenhouse air can be mixed in the conventional manner by using relatively low-powered fans.

In this method, heat exchange can be improved by using a markedly smaller drop size than in the methods where the cooling water comes into contact with the rapidly flowing air.

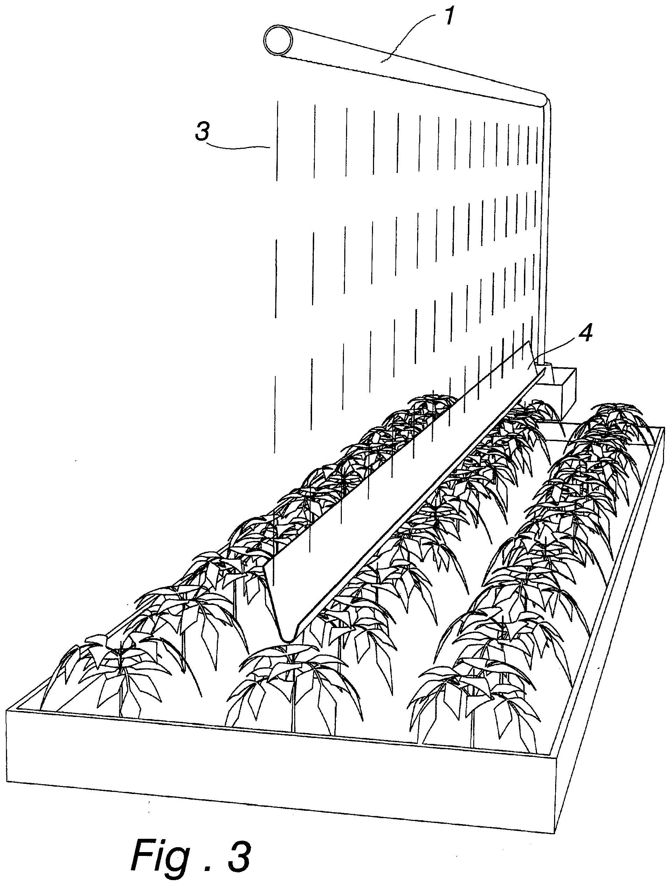

Figure 3 shows another typical embodiment, which can be applied when growing low-growth plants. In this, the water distribution pipes 1 are located in the same way in the upper part of the greenhouse as in Figure 1, but the water collection troughs 4 are positioned above the growths. The troughs used in this application are preferably made of light-permeable material, for example polyethylene sheet or film.

## Claims

1. A system for drying and cooling greenhouse air by means of water cooler than the dew point temperature of the greenhouse air, the system comprising water distribution devices (1) arranged to spray said water cooler than the dew point temperature of the greenhouse air directly into the air space of the greenhouse without using separate condenser chambers, structures and fans for conveying the greenhouse air into the condenser, **characterised in that** said water distribution devices are dimensioned to spray at least 50 litres of water per square meter of greenhouse into the greenhouse air space in an hour, the system further comprising water collection devices (4) arranged to collect the water sprayed into the air space of the greenhouse and to return it at least partly to the devices of the system.

2. A system as claimed in claim 1, where the water distribution devices (1) are located in the upper part of the greenhouse for spraying water between the plant rows.

3. A system as claimed in any of the above claims, where the water distribution devices (1) are located in the upper part of greenhouse and the collection devices above the growth.

4. A system as claimed in claim 1, where the water distribution devices (1) are located laterally in the greenhouse.

5. A system as claimed in claim 1, where the water distribution devices (1) are located under the cultivation tables in the greenhouse.

6. A system as claimed in any of the claims 1 to 5, which further comprises a heat exchanger (6) by means of which the water (5) circulated in the drying and cooling apparatus is cooled.

7. A system as claimed in any of the claims 1 to 5, which further comprises an evaporator apparatus (8) located outside the greenhouse space to be dried and cooled, by means of which apparatus the water circulated in the drying and cooling equipment is cooled.

8. A system as claimed in claim 7, the evaporator apparatus consisting of a water supply (7) and devices (9) intended for spraying water, by means of which the water in the water supply can be sprayed into the air in such a way that the water being sprayed comes into contact with the outdoor air and after this returns again to the water supply or directly to the greenhouse air drying and cooling apparatus.

9. A method for cooling and drying greenhouse air by means of water cooler than the dew point temperature of the greenhouse air, wherein the cooling and drying of the air takes place directly in the air space of the greenhouse, without using separate condenser or heat exchanger structures or fans for conveying the greenhouse air into the condenser by conveying said water (3) cooler than the dew point of the greenhouse air into the air space of the greenhouse by spraying or other means, **characterised in that** the amount of water conveyed per time unit and the temperature being dimensioned in such a way that as the water conveyed passes through the air space of the greenhouse, more humidity is condensed into it from the greenhouse air than water is evaporated from it into the greenhouse air, the amount of water conveyed per time unit being at least 50 litres of water per square meter of greenhouse sprayed into the greenhouse air space in an hour, and where at least some of the water conveyed into the air space of the greenhouse is recovered to be conveyed again for recirculation into the air space of the greenhouse.

10. A method as claimed in claim 9, where the temperature of the water circulated in the apparatus intended for drying and cooling greenhouse air is lowered and the condensed humidity of air is recovered by circulating the water through a heat exchanger (6).

11. A method as claimed in claims 9 or 10, where the temperature of the water circulated in the apparatus intended for drying and cooling greenhouse air is lowered by means of an evaporator (8) located outside the greenhouse being cooled.

12. A greenhouse, the air in which can be dried and cooled by means of water (3) cooler than the dew point temperature of the greenhouse air, the greenhouse comprising devices (1) for conveying said water cooler than the dew point temperature of the greenhouse air into the air space of the greenhouse without using separate condenser chambers, structures and fans for conveying the greenhouse air into the condenser **characterised in that** said devices are dimensioned so that the amount of said water used for cooling may be more than 50 litres/m² of greenhouse area/h, the greenhouse further comprising devices (4) arranged to recover at least some of the water falling or flowing through the air space, and devices arranged to convey at least some of the recovered water again into the air space of the greenhouse.

13. A greenhouse as claimed in claim 12, where the water distribution devices used for drying and cooling the greenhouse air are located in the upper part of the greenhouse for spraying water between the plant rows.

14. A greenhouse as claimed in claim 12, where the water distribution devices used for drying and cooling the greenhouse air are located in the upper part of the greenhouse and the collection devices above the growth.

15. A greenhouse as claimed in claim 12, where the water distribution devices used for drying and cooling the greenhouse air are located laterally in the greenhouse.

16. A greenhouse as claimed in claim 12, where the water distribution devices used for drying and cooling the greenhouse air are located under the cultivation tables in the greenhouse.

17. A greenhouse as claimed in any of the claims 12 to 16, which further comprises a heat exchanger (6) for cooling the water circulating in the drying and cooling devices and for recovering the condensed water.

18. A greenhouse as claimed in any of the claims 12 to 17, in connection with which is further located an evaporation apparatus (8) for cooling the water circulated in the drying and cooling apparatus of the greenhouse.

## Patentansprüche

1. System zum Trocknen und Kühlen von Treibhausluft mittels Wasser, das kühler ist als die Taupunkttemperatur der Treibhausluft, wobei das System Wasserverteilungsvorrichtungen (1) umfasst, die dafür ausgelegt sind, zu sprühen das Wasser, das kühler ist als die Taupunkttemperatur der Treibhausluft, direkt in den Luftraum des Treibhauses zu sprühen, ohne separate Kondensatorkammern, Strukturen und Gebläse zum Transportieren der Treibhausluft in den Kondensator zu verwenden,
**dadurch gekennzeichnet, dass** die Wasserverteilungsvorrichtungen dafür bemessen sind, pro Stunde mindestens 50 Liter Wasser pro Quadratmeter des Treibhauses in den Treibhausluftraum zu sprühen, wobei das System des Weiteren Wasserauffangvorrichtungen (4) umfasst, die dafür ausgelegt sind, das in den Luftraum des Treibhauses gesprühte Wasser aufzufangen und es mindestens teilweise zu den Vorrichtungen des Systems zurückzuführen.

2. System nach Anspruch 1, wobei sich die Wasserverteilungsvorrichtungen (1) im oberen Teil des Treibhauses befinden, um Wasser zwischen die Pflanzenreihen zu sprühen.

3. System nach einem der obigen Ansprüche, wobei sich die Wasserverteilungsvorrichtungen (1) im oberen Teil des Treibhauses und die Auffangvorrichtungen über den Gewächsen befinden.

4. System nach Anspruch 1, wobei die Wasserverteilungsvorrichtungen (1) seitlich in dem Treibhaus angeordnet sind.

5. System nach Anspruch 1, wobei sich die Wasserverteilungsvorrichtungen (1) unter den Pflanzentischen in dem Treibhaus befinden.

6. System nach einem der Ansprüche 1 bis 5, das des Weiteren einen Wärmetauscher (6) umfasst, mittels dem das Wasser (5), das in der Trocknungs- und Kühlvorrichtung zirkuliert wird, gekühlt wird.

7. System nach einem der Ansprüche 1 bis 5, das des Weiteren eine Verdampfervorrichtung (8) umfasst, die sich außerhalb des zu trocknenden und zu kühlenden Treibhausraumes befindet, und mittels der das in der Trocknungs- und Kühlausrüstung zirkulierte Wasser gekühlt wird.

8. System nach Anspruch 7, wobei die Verdampfervorrichtung aus einer Wasserversorgung (7) und Vorrichtungen (9) besteht, die dafür vorgesehen sind, Wasser zu sprühen, mittels denen das Wasser in der Wasserversorgung in einer solchen Weise in die Luft gesprüht werden kann, dass das versprühte Wasser in Kontakt mit der Außenluft kommt und anschließend wieder zu der Wasserversorgung oder direkt zu der Treibhausluft-Trocknungs- und Kühlvorrichtung zurückkehrt.

9. Verfahren zum Kühlen und Trocknen von Treibhausluft mittels Wasser, das kühler ist als die Taupunkttemperatur der Treibhausluft, wobei das Kühlen und Trocknen der Luft direkt im Luftraum des Treibhauses stattfindet, ohne dass separate Kondensator- oder Wärmetauscherstrukturen oder Gebläse zum Transportieren der Treibhausluft in den Kondensator verwendet werden, indem das Wasser (3), das kühler ist als der Taupunkt der Treibhausluft, durch Sprühen oder andere Mittel in den Luftraum des Treibhauses transportiert wird, **dadurch gekennzeichnet, dass** die Menge an Wasser, die pro Zeiteinheit transportiert wird, und die Temperatur so dimensioniert sind, dass, wenn das transportierte Wasser den Luftraum des Treibhauses durchquert, mehr Feuchtigkeit aus der Treibhausluft in sie hinein kondensiert, als Wasser aus ihr in die Treibhausluft verdampft, wobei die Menge an Wasser, die pro Zeiteinheit transportiert wird, mindestens 50 Liter Wasser pro Quadratmeter des Treibhauses beträgt, das pro Stunde in den Treibhausluftraum gesprüht wird, und wobei mindestens ein Teil des in den Luftraum des Treibhauses transportierten Wassers zurückgewonnen wird, um erneut zur Rezirkulation in den Luftraum des Treibhauses transportiert zu werden.

10. Verfahren nach Anspruch 9, wobei die Temperatur des Wassers, das in der Vorrichtung zirkuliert wird, die zum Trocknen und Kühlen von Treibhausluft vorgesehen ist, gesenkt wird und die kondensierte Feuchtigkeit von Luft zurückgewonnen wird, indem das Wasser durch einen Wärmetauscher (6) zirkuliert wird.

11. Verfahren nach den Ansprüchen 9 oder 10, wobei die Temperatur des Wassers, das in der Vorrichtung zirkuliert wird, die zum Trocknen und Kühlen von Treibhausluft vorgesehen ist, mittels eines Verdampfers (8) gesenkt wird, die sich außerhalb des gekühlten Treibhauses befindet.

12. Treibhaus, in dem die Luft mittels Wasser (3), das kühler ist als die Taupunkttemperatur der Treibhausluft, getrocknet und gekühlt werden kann, wobei das Treibhaus Vorrichtungen (1) umfasst, um das Wasser, das kühler ist als die Taupunkttemperatur der Treibhausluft, in den Luftraum des Treibhauses zu transportieren, ohne separate Kondensatorkammern, Strukturen und Gebläse zum Transportieren der Treibhausluft in den Kondensator zu verwenden, **dadurch gekennzeichnet, dass** die Vorrichtungen so dimensioniert sind, dass die Menge an Wasser, das zum Kühlen verwendet wird, mehr als 50 Liter/m² Treibhausfläche/h betragen kann, wobei das Treibhaus des Weiteren Vorrichtungen (4) umfasst, die dafür ausgelegt sind, mindestens einen Teil des Wassers zurückzugewinnen, das durch den Luftraum fällt oder strömt, und Vorrichtungen umfasst, die dafür ausgelegt sind, mindestens einen Teil des zurückgewonnenen Wassers wieder n den Luftraum des Treibhauses zu transportieren.

13. Treibhaus nach Anspruch 12, wobei sich die Wasserverteilungsvorrichtungen, die zum Trocknen und Kühlen der Treibhausluft verwendet werden, im oberen Teil des Treibhauses befinden, um Wasser zwischen die Pflanzenreihen zu sprühen.

14. Treibhaus nach Anspruch 12, wobei sich die Wasserverteilungsvorrichtungen, die zum Trocknen und Kühlen der Treibhausluft verwendet werden, im oberen Teil des Treibhauses und die Auffangvorrichtungen über den Gewächsen befinden.

15. Treibhaus nach Anspruch 12, wobei die Wasserverteilungsvorrichtungen, die zum Trocknen und Kühlen der Treibhausluft verwendet werden, seitlich in dem Treibhaus angeordnet sind.

16. Treibhaus nach Anspruch 12, wobei sich die Wasserverteilungsvorrichtungen, die zum Trocknen und Kühlen der Treibhausluft verwendet werden, unter den Pflanzentischen in dem Treibhaus befinden.

17. Treibhaus nach einem der Ansprüche 12 bis 16, das des Weiteren einen Wärmetauscher (6) umfasst, um das Wasser, das in den Trocknungs- und Kühlvorrichtungen zirkuliert, zu kühlen und das kondensierte Wasser zurückzugewinnen.

18. Treibhaus nach einem der Ansprüche 12 bis 17, an das des Weiteren eine Verdampfungsvorrichtung (8) zum Kühlen des Wassers angeschlossen ist, das in der Trocknungs- und Kühlvorrichtung des Treibhauses zirkuliert.

## Revendications

1. Système destiné à sécher et refroidir de l'air dans une serre à l'aide d'une eau plus froide que la température du point de condensation de l'air dans la serre, le système comprenant des dispositifs de distribution d'eau (1) conçus pour pulvériser ladite eau plus froide que la température du point de condensation de l'air dans la serre directement dans l'espace d'air de la serre sans utiliser de chambres ou de structures de condensation séparées ni de ventilateurs pour transporter l'air de la serre vers le condensateur,
**caractérisé en ce que** lesdits dispositifs de distribution d'eau sont dimensionnés pour pulvériser au moins 50 litres d'eau par mètre carré de serre dans l'espace d'air de la serre en une heure, le système comprenant en outre des dispositifs de collecte d'eau (4) conçus pour collecter de l'eau pulvérisée dans l'espace d'air de la serre et pour renvoyer celle-ci au moins partiellement vers les dispositifs du système.

2. Système selon la revendication 1, dans lequel les dispositifs de distribution d'eau (1) se trouvent dans la partie supérieure de la serre pour pulvériser de l'eau entre les rangées de plantes.

3. Système selon l'une quelconque des revendications précédentes, dans lequel les dispositifs de distribution d'eau (1) se trouvent dans la partie supérieure de la serre et les dispositifs de collecte se trouvent au-dessus des cultures.

4. Système selon la revendication 1, dans lequel les dispositifs de distribution d'eau (1) sont disposés latéralement dans la serre.

5. Système selon la revendication 1, dans lequel les dispositifs de distribution d'eau (1) se trouvent sous les tables de culture dans la serre.

6. Système selon l'une quelconque des revendications 1 à 5, comprenant en outre un échangeur de chaleur (6) permettant de refroidir l'eau (5) circulant dans l'appareil de séchage et de refroidissement.

7. Système selon l'une quelconque des revendications 1 à 5, comprenant en outre un appareil évaporateur (8) situé à l'extérieur de l'espace de la serre à sécher et refroidir, ledit appareil permettant de refroidir l'eau circulant dans les installations de séchage et de refroidissement.

8. Système selon la revendication 7, dans lequel l'appareil évaporateur consiste en une alimentation en eau (7) et des dispositifs (9) destinés à pulvériser de l'eau, à l'aide desquels l'eau se trouvant dans l'alimentation en eau peut être pulvérisée dans l'air de telle façon que l'eau pulvérisée entre en contact avec l'air extérieur puis retourne vers l'alimentation en eau ou directement vers l'appareil de séchage et de refroidissement de la serre.

9. Procédé pour le refroidissement et le séchage d'air dans une serre avec une eau plus froide que la température du point de condensation de l'air dans la serre, dans lequel le refroidissement et le séchage de l'air sont effectués directement dans l'espace d'air de la serre, sans utiliser de structures de condensateur ou d'échangeur de chaleur séparées ni de ventilateur pour transporter l'air de la serre dans le condensateur, en transportant ladite eau (3) plus froide que le point de condensation de l'air dans la serre dans l'espace d'air de la serre par pulvérisation ou d'autres moyens, **caractérisé en ce que** la quantité d'eau transportée par unité de temps et la température sont réglées de telle façon que l'eau transportée traverse l'espace d'air de la serre, plus d'humidité est condensée dans celle-ci à partir de l'air de la serre que d'eau n'est évaporée à partir de celle-ci dans l'air de la serre, la quantité d'eau transportée par unité de temps étant d'au moins 50 litres d'eau par mètre carré de serre pulvérisés dans l'espace d'air de la serre en une heure, et dans lequel au moins une partie de l'eau transportée dans l'espace d'air de la serre est récupérée pour être transportée de nouveau pour être recyclée dans l'espace d'air de la serre.

10. Procédé selon la revendication 9, dans lequel la température de l'eau circulant dans l'appareil destiné à sécher et refroidir l'air dans la serre est réduite et l'humidité d'air condensée est récupérée en faisant circuler l'eau à travers un échangeur de chaleur (6).

11. Procédé selon la revendication 9 ou 10, dans lequel la température de l'eau circulant dans l'appareil destiné à sécher et refroidir l'air dans la serre est réduite à l'aide d'un évaporateur (8) situé à l'extérieur de la serre à refroidir.

12. Serre dont l'air peut être séché et refroidi à l'aide d'une eau (3) plus froide que la température du point de condensation de l'air dans la serre, la serre comprenant des dispositifs (1) destinés à transporter ladite eau plus froide que la température du point de condensation de l'air dans la serre vers l'espace d'air de la serre sans utiliser de chambres ou de structures de condensation séparées ni de ventilateurs pour transporter l'air de la serre vers le condensateur, **caractérisée en ce que** lesdits dispositifs sont dimensionnés de telle façon que la quantité de ladite eau utilisée pour le refroidissement peut s'élever à plus de 50 litres/m² de surface/h de serre, la serre comprenant en outre des dispositifs (4) conçus pour récupérer au moins une partie de l'eau tombant dans l'espace d'air ou s'écoulant à travers celui-ci, et des dispositifs conçus pour renvoyer au moins une partie de l'eau récupérée dans l'espace d'air de la serre.

13. Serre selon la revendication 12, dans laquelle les dispositifs de distribution d'eau utilisés pour sécher et refroidir l'air de la serre se trouvent dans la partie supérieure de la serre pour pulvériser de l'eau entre les rangées de plantes.

14. Serre selon la revendication 12, dans laquelle les dispositifs de distribution d'eau utilisés pour sécher et refroidir l'air de la serre se trouvent dans la partie supérieure de la serre et les dispositifs de collecte se trouvent au-dessus des cultures.

15. Serre selon la revendication 12, dans laquelle les dispositifs de distribution d'eau utilisés pour sécher et refroidir l'air de la serre sont disposés latéralement dans la serre.

16. Serre selon la revendication 12, dans laquelle les dispositifs de distribution d'eau utilisés pour sécher et refroidir l'air de la serre se trouvent sous les tables de culture dans la serre.

17. Serre selon l'une quelconque des revendications 12 à 16, comprenant en outre un échangeur de chaleur (6) destiné à refroidir l'eau circulant dans les dispositifs de séchage et de refroidissement et à récupérer l'eau condensée.

18. Serre selon l'une quelconque des revendications 12 à 17, à laquelle est en outre associé un appareil évaporateur (8) destiné à refroidir l'eau circulant dans l'appareil de séchage et de refroidissement de la serre.
